# EUROPEAN PATENT APPLICATION

(11) **EP 4 761 322 A1**
(43) Date of publication of application: **17.06.2026**
(21) Application number: 24851084.4
(22) Date of filing: 08.08.2024
(51) Int. Cl.: H04W 24/02

(54) **MEASUREMENT METHOD AND DEVICE, AND TERMINAL**

(30) Priority: 10.08.2023 CN 202311006170
(71) Applicant: Vivo Mobile Communication Co., Ltd., Dongguan, Guangdong 523863 (CN)
(72) Inventor: SUN, Yanliang, Dongguan, Guangdong 523863 (CN); WEI, Xusheng, Dongguan, Guangdong 523863 (CN); YANG, Qian, Dongguan, Guangdong 523863 (CN)
(74) Representative: Walaski, Jan Filip
(86) International application number: PCT/CN2024/110611
(87) International publication number: WO 2025/031439

(57) **Abstract**

The present application relates to the technical field of communications. Disclosed are a measurement method and device, and a terminal. The measurement method in the embodiments of the present application comprises: a terminal acquires target configuration signaling, wherein the target configuration signaling instructs to perform L1 measurement on a first frequency point; the terminal performs L3 measurement on the first frequency point to obtain a first measurement result; and on the basis of the first measurement result, the terminal performs L1 measurement on the first frequency point to obtain a second measurement result.

## Description

### CROSS-REFERENCE TO RELATED APPLICATIONS

This application claims priority to Chinese Patent Application No. 202311006170.6, filed on August 10, 2023 in China, which is incorporated herein by reference in its entirety.

### TECHNICAL FIELD

This application relates to the field of communication technologies, and specifically, to a measurement method and apparatus, and a terminal.

### BACKGROUND

In communication, measurements commonly used by a terminal include a layer (Layer, L) 1 measurement and an L3 measurement. In the related art, configuration and result reporting of the L1 measurement and the L3 measurement are completely independent. In addition, after performing L3 measurement to obtain a measurement result, the terminal reports the measurement result to a network side. The network side uses the measurement result. For example, the network side determines, based on the measurement result, whether a mobility management requirement such as a cell change is satisfied. The L1 measurement is usually used for performing measurement reporting on signal quality of different beams in a serving cell, which is used for an objective such as beam handover. In this case, because configuration and result reporting of the L1 measurement and the L3 measurement are completely independent, most baseband execution modules are also completely independent. In other words, a measurement result of the L3 measurement is not used for the L1 measurement, and a measurement result of the L1 measurement is not used for the L1 measurement either. As a result, when an L1 measurement process is used for the cell change in the mobility management, it requires excessive interaction between the terminal and the network side, resulting in an overly complex L1-measurement-based mobility management process.

### SUMMARY

Embodiments of this application provide a measurement method and apparatus, and a terminal, to resolve a problem that an L1-measurement-based mobility management process is overly complex.

According to a first aspect, a measurement method is provided, including:
obtaining, by a terminal, a target configuration signaling, where the target configuration signaling instructs to perform L1 measurement on a first frequency;
performing, by the terminal, L3 measurement on the first frequency, to obtain a first measurement result; and
performing, by the terminal, L1 measurement on the first frequency based on the first measurement result, to obtain a second measurement result.

According to a second aspect, a measurement apparatus is provided, including:
an obtaining module, configured to obtain a target configuration signaling, where the target configuration signaling instructs to perform layer L1 measurement on a first frequency;
a first measurement module, configured to perform L3 measurement on the first frequency, to obtain a first measurement result; and
a second measurement module, configured to perform L1 measurement on the first frequency based on the first measurement result, to obtain a second measurement result.

According to a third aspect, a terminal is provided. The terminal includes a processor and a memory. The memory stores a program or instructions runnable on the processor. When the program or the instructions are executed by the processor, steps of the measurement method according to the embodiments of this application are implemented.

According to a fourth aspect, a terminal is provided, including a processor and a communication interface. The communication interface is configured to obtain a target configuration signaling, where the target configuration signaling instructs to: perform layer L1 measurement on a first frequency; perform L3 measurement on the first frequency, to obtain a first measurement result; and perform L1 measurement on the first frequency based on the first measurement result, to obtain a second measurement result.

According to a fifth aspect, a readable storage medium is provided. The readable storage medium stores a program or instructions. When the program or the instructions are executed by a processor, steps of the measurement method according to the embodiments of this application are implemented.

According to a sixth aspect, a chip is provided. The chip includes a processor and a communication interface. The communication interface is coupled to the processor, and the processor is configured to run a program or instructions, to implement the measurement method according to the embodiments of this application.

According to a seventh aspect, a computer program/program product is provided. The computer program/program product is stored in a storage medium, and the computer program/program product is executed by at least one processor, to implement steps of the measurement method according to the embodiments of this application.

In the embodiments of this application, the terminal obtains a target configuration signaling, where the target configuration signaling instructs to: perform layer L1 measurement on a first frequency; perform, by the terminal, L3 measurement on the first frequency, to obtain a first measurement result; and perform, by the terminal, L1 measurement on the first frequency based on the first measurement result, to obtain a second measurement result. In this way, L1 measurement may be performed based on the L3 measurement result, so that in an L1 measurement process, there is no need to correspondingly interact with a network side for the L3 measurement result, thereby reducing interaction between the terminal and the network side in the L1 measurement process, simplifying an L1-measurement-based mobility management process, and improving efficiency of the L1-measurement-based mobility management process. In addition, because the efficiency of the mobility management process is improved, a handover interruption duration in a high mobility scenario may also be reduced.

### BRIEF DESCRIPTION OF THE DRAWINGS

FIG. 1 is a block diagram of a wireless communication system to which an embodiment of this application can be applied;
FIG. 2 is a flowchart of a measurement method according to an embodiment of this application;
FIG. 3 is a schematic diagram of measurement according to an embodiment of this application;
FIG. 4 is a schematic diagram of another measurement according to an embodiment of this application;
FIG. 5 is a schematic diagram of another measurement according to an embodiment of this application;
FIG. 6 is a structural diagram of a measurement apparatus according to an embodiment of this application;
FIG. 7 is a structural diagram of a communication device according to an embodiment of this application; and
FIG. 8 is a structural diagram of a terminal according to an embodiment of this application.

### DETAILED DESCRIPTION

The following clearly describes technical solutions in embodiments of this application with reference to the accompanying drawings in the embodiments of this application. It is clear that the described embodiments are some rather than all of the embodiments of this application. All other embodiments obtained by a person of ordinary skill in the art based on the embodiments of this application fall within the protection scope of this application.

Terms "first", "second", and the like in this application are used for distinguishing between similar objects, but are not used for describing a specific order or sequence. It should be understood that terms used in this way are exchangeable in a proper case, so that the embodiments of this application can be implemented in an order different from the order shown or described herein described. In addition, objects distinguished by "first" and "second" are generally of a same type, and a quantity of objects is not limited. For example, a first object may be one object, or may be a plurality of objects. In addition, "or" in this application indicates at least one of connected objects. For example, "A or B" covers three solutions, namely, solution 1: including A and excluding B; solution 2: including B and excluding A; and solution 3: including both A and B. The character "/" generally indicates that associated objects in the context are in an "or" relationship.

A term "indication" in this application may be a direct indication (or an explicit indication) or an indirect indication (or an implicit indication). The direct indication may be understood as that a sender explicitly notifies a receiver of content such as specific information, an operation that needs to be performed, or a request result in a sent indication. The indirect indication may be understood as that a receiver determines corresponding information based on an indication sent by a sender; or performs determining, and determines, based on a determining result, an operation that needs to be performed, a request result, or the like.

It should be noted that, technologies described in the embodiments of this application are not limited to a long term evolution (Long Term Evolution, LTE)/LTE-advanced (LTE-Advanced, LTE-A) system, and may be further applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-Carrier Frequency Division Multiple Access, SC-FDMA), or another system. The terms "system" and "network" in the embodiments of this application are often used interchangeably, and the described technologies can be applied to the systems and radio technologies mentioned above, and can also be applied to other systems and radio technologies. A new radio (New Radio, NR) system is described below as an example, and the term NR is used in most of the following descriptions. However, the technologies can also be applied to systems other than the NR system, such as a 6th Generation (6^{th} Generation, 6G) communication system.

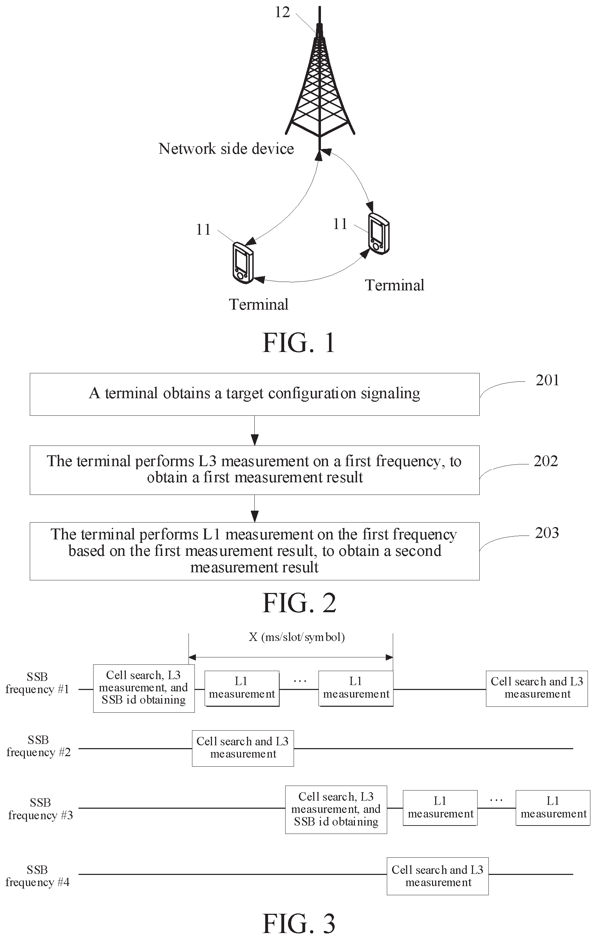

FIG. 1 is a block diagram of a wireless communication system to which an embodiment of this application can be applied. The wireless communication system includes a terminal 11 and a network side device 12. The terminal 11 may be a terminal side device such as a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR)/virtual reality (Virtual Reality, VR) device, a robot, a wearable device (Wearable Device), a flight vehicle (flight vehicle), a vehicle user equipment (Vehicle User Equipment, VUE), a shipborne device, a pedestrian user equipment (Pedestrian User Equipment, PUE), a smart home (a home device with a wireless communication function, such as a refrigerator, a television, a washing machine, or furniture), a game console, a personal computer (Personal Computer, PC), a teller machine, or a self-service machine. The wearable device includes: a smart watch, a smart band, a smart headset, smart glasses, smart jewelry (a smart bracelet, a smart hand chain, a smart ring, a smart necklace, a smart bangle, a smart anklet, and the like), a smart wrist strap, smart clothing, or the like. The vehicle user equipment may also be referred to as an in-vehicle terminal, an in-vehicle controller, an in-vehicle module, an in-vehicle component, an in-vehicle chip, an in-vehicle unit, or the like. It should be noted that a specific type of the terminal 11 is not limited in this embodiment of this application.

The network side device 12 may include an access network device or a core network device. The access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, Wi-Fi) node, or the like. The base station may be referred to as a node B (Node B, NB), an evolved node B (Evolved Node B, eNB), a next generation node B (the next generation Node B, gNB), a new radio node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home node B (home Node B, HNB), a home evolved node B (home evolved Node B), a transmission reception point (Transmission Reception Point, TRP), or another appropriate term in the art. The base station is not limited to a specific technical term, as long as the same technical effect can be achieved. It should be noted that, in this embodiment of this application, only a base station in an NR system is used as an example for description, and a specific type of the base station is not limited.

The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that in this embodiment of this application, the core network device in the NR system is merely used as an example for description, and a specific type of the core network device is not limited.

A measurement method and apparatus, and a terminal according to the embodiments of this application are described in detail below with reference to the accompanying drawings by using some embodiments and application scenarios thereof.

Referring to FIG. 2, FIG. 2 is a flowchart of a measurement method according to an embodiment of this application. As shown in FIG. 2, the method includes the following steps.

Step 201: A terminal obtains a target configuration signaling, where the target configuration signaling instructs to perform L1 measurement on a first frequency.

The obtaining a target configuration signaling may be that the terminal receives a target configuration signaling sent by a network side device.

That the target configuration signaling instructs to perform layer L1 measurement on the first frequency may be that the target configuration signaling explicitly or implicitly instructs to perform layer L1 measurement on the first frequency. That the target configuration signaling instructs to perform layer L1 measurement on the first frequency may alternatively be understood as that the target configuration signaling configures the terminal to perform L1 measurement on the first frequency.

The first frequency may be one or more frequencies.

Step 202: The terminal performs L3 measurement on the first frequency, to obtain a first measurement result.

Step 202 may be triggered by step 201. As shown in FIG. 2, step 202 is performed after step 201. In some implementations, step 202 may be performed before step 201, or there may be overlap in performance time of step 201 and step 202.

In this embodiment of this application, the L3 measurement is not limited to measurement performed on layer 3. In this embodiment of this application, the L3 measurement includes, but is not limited to, at least one of the following:
discovery of a cell, obtaining of a synchronization signal block (Synchronization Signal Block, SSB) sequence number, and obtaining of coarse synchronization and coarse beam information.

The L3 measurement may alternatively be performed at layer 1.

Similarly, the first measurement result includes, but is not limited to, at least one of the following:
discovery of a cell, the sequence number of the SSB, coarse synchronization information, and coarse beam information.

The sequence number of the SSB may also be referred to as an identifier of the SSB, and the coarse synchronization may be time coarse synchronization. For specific definitions of coarse synchronization and coarse beam, refer to corresponding definitions in a protocol.

In some implementations, the discovery of a cell may be detecting a primary synchronization signal (Primary Synchronization Signal, PSS) or a secondary synchronization signal (Secondary Synchronization Signal, SSS), to discover a cell. The coarse synchronization may be detecting a PSS or an SSS, to perform coarse synchronization. Alternatively, the obtaining of coarse synchronization and coarse beam information may be performing cell measurement. For example, the obtaining of coarse synchronization and coarse beam information is SSB-based cell measurement. The obtaining of a sequence number of an SSB may be time sequence number detection.

The L3 measurement is used for helping the L1 measurement to perform cell discovery, obtaining of a sequence number of an SSB, obtaining of coarse synchronization, obtaining of coarse beam information, and the like. In addition, the L3 measurement is further used for discovering the first frequency before L1 measurement is performed on the first frequency.

Step 203: The terminal performs L1 measurement on the first frequency based on the first measurement result, to obtain a second measurement result.

In this embodiment of this application, the L1 measurement in this embodiment of this application may include beam measurement or beam synchronization, for example, fine beam measurement or fine synchronization measurement, to further include measurement reported at L1.

In some implementations, the performing L1 measurement on the first frequency may be performing L1 measurement on a reference signal of the first frequency.

In this embodiment of this application, according to the foregoing steps, L1 measurement may be performed based on the L3 measurement result, so that in an L1 measurement process, there is no need to correspondingly interact with the network side for the L3 measurement result, thereby reducing interaction between the terminal and the network side in a cell change process used in mobility management in the L1 measurement process, simplifying an L1-measurement-based mobility management process, and greatly improving efficiency of mobility management. In addition, the L1-measurement-based mobility management process offers higher gains compared to gains of an L3 measurement-based mobility management process. Moreover, because the efficiency of the mobility management process is improved, a handover interruption duration in a high mobility scenario may also be reduced, thereby improving user experience. For example, the L3 measurement includes cell discovery. When L1 measurement is performed in this way, cell discovery does not need to be performed. The L1 measurement is directly performed on a cell discovered by the L3 measurement, to simplify the L1 measurement process, and further improve efficiency of the L1-measurement-based mobility management process. For another example, the L3 measurement includes obtaining of a sequence number of an SSB. When L1 measurement is performed in this way, the L1 measurement may be directly performed based on the sequence number of the SSB, to simplify the L1 measurement process, and further improve efficiency of the L1-measurement-based mobility management process. For another example, the L3 measurement includes obtaining of coarse synchronization or coarse beam information. When L1 measurement is performed in this way, the L1 measurement may be directly performed based on the coarse synchronization information or the coarse beam information, and the obtaining of coarse synchronization and coarse beam information does not need to be correspondingly performed, to simplify the L1 measurement process, and further improve efficiency of the L1-measurement-based mobility management process.

In addition, before the L1 measurement is performed, information such as synchronization and beam required for the L1 measurement is obtained through a process related to the L3 measurement, so that performance of the L1 measurement can be effectively ensured. Moreover, the L3 measurement process is reused, and a new cell discovery process or the like is not introduced, so that a baseband related to the L1 measurement of the terminal can be implemented simply and efficiently.

In an optional implementation, the performing, by the terminal, L3 measurement on the first frequency, to obtain a first measurement result includes:
in a first case, performing, by the terminal, L3 measurement on the first frequency, to obtain the first measurement result, where
the first case includes one of the following:
   instructing, by a configuration signaling obtained by the terminal, to perform L3 measurement on the first frequency; or
   skipping instructing, by a configuration signaling obtained by the terminal, to perform L3 measurement on the first frequency, where
   the configuration signaling obtained by the terminal includes the target configuration signaling, or includes a configuration signaling different from the target configuration signaling.

The configuration signaling obtained by the terminal may be the target configuration signaling, or may be a configuration signaling obtained before the terminal obtains the target configuration signaling.

In a case that the configuration signaling obtained by the terminal skips instructing to perform L3 measurement on the first frequency, the terminal may determine, based on the target configuration signaling, to perform L3 measurement on the first frequency, to obtain the first measurement result.

In this implementation, it may be implemented that, the terminal performs L3 measurement on the first frequency in a case that the configuration signaling instructs to or skips instructing to perform L3 measurement on the first frequency, to simplify the L1 measurement process, and further improve efficiency of the L1 measurement.

Optionally, in a case that the first case includes the instructing, by a configuration signaling obtained by the terminal, to perform L3 measurement on the first frequency, the first case further includes at least one of the following:
skipping indicating, by the configuration signaling obtained by the terminal, reporting information associated with the L3 measurement performed on the first frequency; and
instructing, by the configuration signaling obtained by the terminal, the terminal to obtain a sequence number of an SSB on the first frequency, or skipping instructing, by the configuration signaling obtained by the terminal, the terminal to obtain a sequence number of an SSB on the first frequency, where
in a case that the configuration signaling obtained by the terminal skips instructing the terminal to obtain the sequence number of the SSB on the first frequency, the terminal determines that the L3 measurement performed on the first frequency includes obtaining the sequence number of the SSB.

That the configuration signaling skips indicating the reporting information associated with the L3 measurement performed on the first frequency may be that the configuration signaling does not configure a reporting event associated with the L3 measurement, that is, the configuration signaling skips instructing the terminal to report the first measurement result.

The instructing the terminal to obtain a sequence number of an SSB on the first frequency may be instructing the terminal to report the sequence number of the SSB on the first frequency. The skipping instructing the terminal to obtain a sequence number of an SSB on the first frequency may be skipping instructing the terminal to report the sequence number of the SSB on the first frequency.

In this implementation, it may be implemented that, in a case that the target configuration signaling does not configure the L3 measurement performed on the first frequency, or only configures the L3 measurement performed on the first frequency, but does not have any reporting information associated with reporting of the L3 measurement, the terminal determines that the first frequency also needs to perform an L3 measurement-related behavior, to perform L1 measurement based on the L3 measurement result. Further, in the L1 measurement process, there is no need to interact with the network side for network side-related information that is already learned from the L3 measurement result, thereby simplifying the L1 measurement process, and further improving efficiency of the L1 measurement.

In some implementations, the terminal reports the first measurement result only in a case that the configuration signaling indicates the reporting information associated with the L3 measurement performed on the first frequency. In other words, the terminal does not report the first measurement result in a case that the configuration signaling does not indicate the reporting information associated with the L3 measurement performed on the first frequency. The terminal reports the first measurement result only in a case that a frequency of L3 measurement and L3 reporting is configured. For example, as shown in FIG. 3, when a network configures the L1 measurement on an SSB frequency (SSB-freq) #1 in the figure, but does not configure the L3 measurement on the SSB-freq #1, or configures only the L3 measurement, but does not have any information associated with reporting of the L3 measurement, the terminal determines that the frequency also needs to perform an L3 measurement-related behavior.

In this implementation, it may further be implemented that if the target configuration signaling configures the L1 measurement for the first frequency, and the configuration signaling obtained by the terminal configures the L3 measurement for this frequency, but does not configure obtaining or reporting of a sequence number of an SSB, the terminal determines that the sequence number of the SSB also needs to be obtained on this frequency. Optionally, the implementation further includes: If the target configuration signaling configures the L1 measurement for the first frequency, and the configuration signaling obtained by the terminal configures the L3 measurement for this frequency, but neither obtaining or reporting of a sequence number of an SSB nor instruction information of synchronization of a sequence number of an SSB of this frequency is configured, the terminal determines that the sequence number of the SSB also needs to be obtained on this frequency.

Optionally, in a case that the terminal expects that the target configuration signaling instructs to perform layer L1 measurement on the first frequency, the configuration signaling obtained by the terminal instructs to perform L3 measurement on the first frequency. The performing L3 measurement on the first frequency may not include configuring performing L3 reporting on the first frequency herein. By adding such a configuration manner, an existing configuration signaling can be reused to independently instruct the L3 measurement process, without a need to instruct L3 reporting. The terminal may directly perform L1 measurement based on the L3 measurement result, thereby reducing interaction and improving efficiency of the L1-measurement-based mobility management process.

The foregoing expectation may be understood as that the terminal responds to the target configuration signaling in a case that the target configuration signaling satisfies the foregoing expectation of the terminal. Alternatively, the foregoing expectation may be understood as that in a case that the target configuration signaling does not satisfy the foregoing expectation of the terminal, the terminal does not respond to the target configuration signaling (for example, the terminal does not perform the L1 measurement), or the terminal requests, to the network side, to resend the configuration signaling.

In addition, the foregoing expectation of the network side for the terminal is obtained in advance. Therefore, if L1 measurement is configured for the first frequency in the target configuration signaling, the network side configures the L3 measurement for the frequency, and instructs to obtain the sequence number of the SSB. Otherwise, the terminal may not perform L1 measurement on the first frequency.

In this implementation, through the foregoing expectation, a measurement behavior of the terminal may be caused to match a configuration signaling on the network side, to reduce complexity of the terminal.

In an optional implementation, the performing, by the terminal, L1 measurement on the first frequency based on the first measurement result, to obtain a second measurement result includes:
in a second case, performing, by the terminal, L1 measurement on the first frequency based on the first measurement result, to obtain the second measurement result. where
the second case includes:
   a time difference between measurement time for the L3 measurement performed on the first frequency and measurement time for the L1 measurement performed on the first frequency being within a preset range.

The preset range may be specified in a protocol or configured by the network side.

In this implementation, it may be implemented that before the L1 measurement is performed, the terminal performs L1 measurement on the first frequency based on the first measurement result to obtain the second measurement result only in a case that the terminal has performed L3 measurement on the first frequency recently, and does not perform L1 measurement in a case that the foregoing second case is not satisfied, that is, the terminal performs L1 measurement on the first frequency only after the terminal has completed at least one L3 measurement on the first frequency recently. This can reduce power consumption of the terminal.

In an optional implementation, in a case that the terminal is configured to perform measurement on a plurality of frequencies including the first frequency, and the terminal shares a same set of cell search modules for the plurality of frequencies, the terminal extends the measurement time for the L3 measurement performed on the first frequency based on a target frequency quantity and an L3 measurement frequency quantity, and the L3 measurement frequency quantity is a quantity of other frequencies in the plurality of frequencies than a frequency configured by the network side for L1 measurement; and
in a case that the cell search module is a cell search module associated with a primary component carrier (primary component carrier, PCC), the target frequency quantity is equal to a frequency quantity of frequencies configured by the network side for L1 measurement, and the frequencies configured by the network side for L1 measurement at least include a PCC frequency; or
in a case that the cell search module is a cell search module associated with a secondary component carrier (secondary component carrier, SCC), the target frequency quantity is equal to a frequency quantity of frequencies configured by the network side for L1 measurement minus a frequency quantity of PCC, and the frequency quantity of PCC is a frequency quantity of PCC in the frequencies configured by the network side for L1 measurement.

The performing measurement on a plurality of frequencies may be performing L3 measurement or L1 measurement on the plurality of frequencies. L3 measurement and L1 measurement, or only L3 measurement may be performed on a part of the frequencies. Alternatively, L3 measurement and L1 measurement are performed on all of the frequencies.

The frequency configured by the network side for L1 measurement refers to that a network side signaling configures the L1 measurement for this frequency. For the frequency configured by the network side for L1 measurement, the terminal may directly perform L1 measurement on the frequency, or may perform L1 measurement on the frequency based on an instruction of the network side. For example, the network side configures the L1 measurement for a frequency, and the terminal needs to use the frequency as a frequency on which L3 measurement needs to be performed. If L1 measurement is configured for a frequency, but the network is inactive (that is, the network skips instructing to perform L1 measurement), the terminal may not start the L1 measurement on the frequency immediately, or may start the L1 measurement only after obtaining a network instruction (for example, after the L3 measurement result is reported to the network).

In this embodiment of this application, the frequency configured by the network side for L1 measurement includes the first frequency instructed by the target configuration signaling. The first frequency may be that the network side configures the L1 measurement before the target configuration signaling instructs to, or may be that the target configuration signaling directly instructs to perform L1 measurement, that is, the L1 measurement performed on the first frequency does not need to be configured through the network side signaling before the target configuration signaling, or may be that the target configuration signaling instructs to perform L1 measurement on the first frequency, which is equivalent to that the network side configures the L1 measurement performed on the first frequency.

The frequency configured by the network side for L1 measurement may be a plurality of first frequencies that are instructed by the target configuration signaling and on which L1 measurement is performed, that is, the target configuration instruction instructs to perform L1 measurement on the plurality of first frequencies. Alternatively, the frequency configured by the network side for L1 measurement may include: the first frequency instructed by the target configuration signaling, and a frequency that is instructed by another configuration signaling received by the terminal and on which L1 measurement is performed. In this embodiment of this application, the frequency configured by the network side for L1 measurement may be referred to as the first frequency.

That the measurement time for the L3 measurement performed on the first frequency is extended by the terminal based on the target frequency quantity and the L3 measurement frequency quantity may include:
extending, based on a first sum, the measurement time for the L3 measurement performed on the first frequency, where the first sum is equal to a sum of the target frequency quantity and the L3 measurement frequency quantity; and
extending, based on a second sum, the measurement time for the L3 measurement performed on the first frequency, where the second sum is equal to an integer-weighted sum of the target frequency quantity and the L3 measurement frequency quantity.

The quantity of other frequencies in the plurality of frequencies than the frequency configured by the network side for L1 measurement may also be referred to as a quantity of frequencies of other shared cell search modules.

That the measurement time for the L3 measurement performed on the first frequency is extended by the terminal based on the target frequency quantity and the L3 measurement frequency quantity may be: determining a longest value of the measurement time for the L3 measurement performed on the first frequency by multiplying a basic value determined based on a network configuration by a measurement time expansion factor outside a measurement gap (gap). A simple implementation is: determining, by the terminal, the basic value based on the network configuration, multiplying the basic value by the measurement time expansion factor, determining a longest time period allowed for completing measurement on a frequency, and performing time division multiplexing on the cell search module in measurement scheduling of the plurality of frequencies.

In this implementation, in a case that the cell search module is a PCC-associated cell search module, the measurement time expansion factor outside the measurement gap (gap) is the integer-weighted sum of the target frequency quantity and the L3 measurement frequency quantity, where the L3 measurement frequency quantity includes a sum of one or more of the following:
a PCC quantity, which is usually determined as 1; and
a quantity of channel state information reference signal (Channel State Information Reference Signal, CSI-RS)-based L3 measurements configured on the PCC, where when the CSI-RS-based L3 measurement is configured on the PCC, the quantity is 1.

In a case that the cell search module is an SCC-associated cell search module, the measurement time expansion factor outside the measurement gap (gap) is not less than the target frequency quantity, and the L3 measurement frequency quantity at least includes a sum of one or more of the following:
a quantity of frequencies on which L3 measurement is performed on the SSB without using the gap in the SCC;
a quantity of frequencies on which L3 measurement is performed on the SSB without using the gap in the SCC;
a quantity of frequencies on which L3 measurement is performed on the SSB without using the gap and neighboring cell measurement needs to be performed in the SCC;
a quantity of frequencies on which L3 measurement is performed on the SSB without using the gap and neighboring cell measurement does not need to be performed in the SCC;
a quantity of frequencies on which neighboring cell measurement needs to be performed and the CSI-RS-based L3 measurement is configured in the SCC;
a quantity of frequencies on which neighboring cell measurement does not need to be performed and the CSI-RS-based L3 measurement is configured in the SCC; and
a quantity of frequencies on which inter-frequency measurement needs to be performed outside the measurement gap.

In some implementations, frequencies corresponding to the target frequency quantity may be intra-frequencies that are the same as the PCC or SCC frequencies, or may be inter-frequencies for L1 measurement performed outside the measurement gap. In addition, the frequencies corresponding to the target frequency quantity include at least the PCC frequency.

For example, it is assumed that a quantity of FR2 PCCs is 1, and a quantity of the CSI-RS-based measurements configured on the FR2 PCC is 1; a quantity of frequencies on which L3 measurement is performed on the SSB without using the gap and neighboring cell measurement needs to be performed on the FR2 SCC is 1; the quantity of frequencies on which neighboring cell measurement needs to be performed and the CSI-RS-based L3 measurement is configured in the SCC is 0; a quantity of frequencies on which L3 measurement is performed on the SSB without using the gap and neighboring cell measurement does not need to be performed on the FR2 SCC is 3; the quantity of frequencies on which inter-frequency measurement needs to be performed outside the measurement gap is 2; the quantity of frequencies on which neighboring cell measurement does not need to be performed and the CSI-RS-based L3 measurement is configured in the SCC is 0; and the target frequency quantity is 2, where one of the target frequencies is the PCC. Based on the foregoing assumption:

If it is further assumed that the cell search module is the PCC-associated cell search module, the measurement time expansion factor for the L3 measurement performed on the first frequency = the quantity of FR2 PCCs + the quantity of the CSI-RS-based measurements configured on the FR2 PCC + a quantity of other frequencies in the frequencies configured by the network side for L1 measurement than the PCC = 1 + 1 + (2 - 1) = 3.

If it is further assumed that the cell search module is the SCC-associated cell search module, the measurement time expansion factor for the L3 measurement performed on the first frequency = 2 * (the quantity of frequencies on which L3 measurement is performed on the SSB without using the gap and neighboring cell measurement needs to be performed on the FR2 SCC + the quantity of other frequencies in the frequencies configured by the network side for L1 measurement than the PCC + the quantity of frequencies on which neighboring cell measurement needs to be performed and the CSI-RS-based L3 measurement is configured in the SCC) = 2 * (1 + (2 - 1) + 0) = 4.

In this implementation, the terminal shares a set of cell search modules for the plurality of frequencies, the cell search module may be a PCC-associated cell search module, or may be an SCC-associated cell search module, and the cell search module may be a hardware module or a software module. For example, in a case that the first frequency is an inactive SCC frequency or an inter-frequency, and the network side configures the L1 measurement for the first frequency outside the measurement gap (gap), the terminal shares the cell search module with the PCC while performing L3 measurement on the first frequency. For another example, optionally, in a case that the first frequency is an inactive SCC frequency or an inter-frequency, and the network side configures the L1 measurement for the first frequency outside the measurement gap (gap), the terminal shares the cell search module with the SCC while performing L3 measurement on the first frequency.

In this implementation, because the measurement time for the L3 measurement performed on the first frequency is extended, in a case that measurement performed on the plurality of frequencies shares the same set of cell search modules, measurement performance for the L3 measurement can be ensured, and sharing of the same set of cell search modules can be supported, to save terminal resource overheads.

In an optional implementation, the performing, by the terminal, L1 measurement on the first frequency based on the first measurement result, to obtain a second measurement result includes:
performing, by the terminal, L1 measurement on a first SSB in a first cell, to obtain the second measurement result, where
the first measurement result includes at least one of the following:
discovery of the first cell; and
a sequence number of the first SSB.

The first cell is a cell discovered when L3 measurement is performed on the first frequency, and the sequence number of the first SSB is a sequence number of an SSB obtained when L3 measurement is performed on the first frequency. For example, in the L3 measurement process, when discovering an SSB whose sequence number is X1 on a cell A, and completing the L3 measurement, the terminal performs L1 measurement on the SSB whose sequence number is X1 on the cell A.

In this implementation, because the L1 measurement is performed based on the cell discovered by the L3 measurement and the sequence number of the first SSB, the L1 measurement process can be simplified, and efficiency of the L1 measurement can also be improved.

Optionally, the performing, by the terminal, L1 measurement on a first SSB in a first cell, to obtain the second measurement result includes:
in a case that the first frequency is an inactive-state SCC frequency or an inter-frequency, and the terminal performs L3 measurement on the first frequency within a first duration, performing, by the terminal, L1 measurement on the first SSB in the first cell, to obtain the second measurement result.

The first duration is specified in a protocol or configured by the network side. In addition, the first duration for the inactive-state SCC frequency or the first duration for the inter-frequency may be different. For example, the first durations that are specified in a protocol or configured by the network side respectively correspond to the inactive-state SCC frequency and the inter-frequency.

Time corresponding to the first duration includes time whose duration is the first duration before the terminal performs L1 measurement.

In some implementations, the first duration is a fixed value, or a value by taking a fixed multiple of an L3 measurement period.

In some implementations, the first duration may be a duration whose most recent duration before the L1 measurement is performed is the first duration.

In this implementation, it may be implemented that, for the inactive-state SCC frequency or the inter-frequency, the terminal performs L1 measurement on the first SSB in the first cell only in a case that the L3 measurement is performed on the frequency within the first duration. Otherwise, the terminal does not perform L1 measurement on the first SSB in the first cell. In this way, measurement performance of the L1 measurement can be ensured, to prevent the terminal from moving into a range of the first cell due to high-speed movement of the terminal. Consequently, the L1 measurement fails. For example, for the L1 measurement performed on the inactive-state SCC frequency or the inter-frequency, if the terminal has previously discovered the SSB whose sequence number is X1 on the cell A in the L3 measurement process within the first duration, and completes the L3 measurement, the terminal performs L1 measurement on the SSB whose sequence number is X1 on the cell A. Before the terminal discovers the SSB whose sequence number is X1 on the cell A through the L3 measurement and completes the measurement, the terminal has no L1 measurement requirement on the SSB, that is, may not perform L1 measurement.

In some implementations, in a case that the terminal does not perform L3 measurement on a first reference signal of the first frequency within the first duration, the terminal does not perform L1 measurement on the first reference signal of the first frequency. This can reduce power consumption of the terminal. For example, if time for which L3 measurement is performed on a reference signal on an inter-frequency last time has exceeded the first duration, the terminal may not perform L1 measurement on the reference signal before completing the L3 measurement next time.

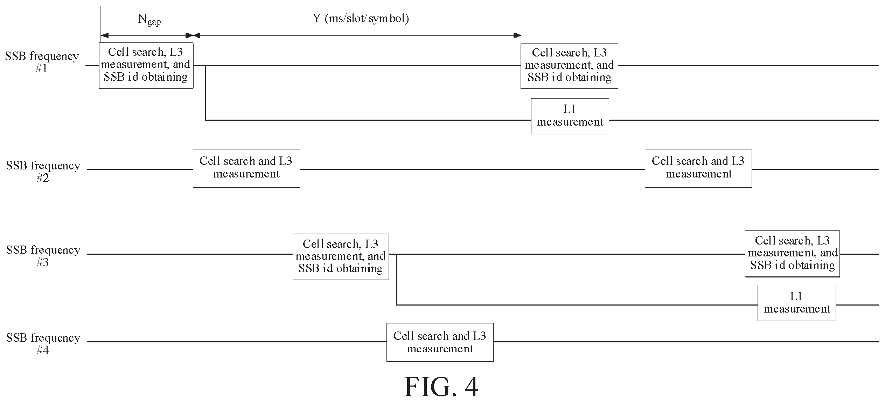

In some implementations, the terminal may perform L3 measurement for a plurality of times for the first frequency. The L1 measurement performed in step 203 may be performed at the same time with another L3 measurement, and the another L3 measurement is L3 measurement after the L3 measurement in step 202. For example, as shown in FIG. 4, the terminal performs second L3 measurement and L1 measurement on the SSB frequency #1 at the same time. In addition, the first duration may be Y ms/slot/symbol shown in FIG. 4.

In some implementations, in a case that the terminal does not perform L3 measurement on the first reference signal of the first frequency within the first duration, an L1 measurement indicator and an L3 measurement indicator of the terminal on the first frequency may be a same indicator.

Optionally, measurement time of the terminal for the first frequency is equal to a sum of L3 measurement time and L1 measurement time; or
the L1 measurement performed by the terminal on the first frequency occupies a first part of an SSB resource of the first frequency, the L3 measurement performed by the terminal on the first frequency occupies a second part of the SSB resource of the first frequency, and the terminal extends a measurement indicator of the first frequency; or
the L1 measurement performed by the terminal on the first frequency occupies a first part of a time interval (gap) associated with the first frequency, the L3 measurement performed by the terminal on the first frequency occupies a second part of the time interval associated with the first frequency, and the terminal extends a measurement indicator of the first frequency.

That the measurement time of the terminal for the first frequency is equal to the sum of the L3 measurement time and the L1 measurement time may be that, when the L1 measurement and the L3 measurement share a same set of cell search modules, the measurement time of the terminal for the first frequency is equal to the sum of the L3 measurement time and the L1 measurement time. For example, for L1 measurement performed on an inactive-state SCC frequency or L1 measurement performed on an inter-frequency, a sharing manner of the L1 measurement and the L3 measurement is as follows. The L1 measurement is performed after the L3 measurement, and measurement time on the frequency is the sum of the L3 measurement time and the L1 measurement time. In addition, when the network side instructs the terminal to perform measurement on a plurality of frequencies, total measurement time (including the L3 measurement and the L1 measurement) for the plurality of frequencies is a sum of measurement time for all frequencies on which a cell search module needs to be shared.

In this implementation, because the measurement time of the terminal for the first frequency is equal to the sum of the L3 measurement time and the L1 measurement time, the L3 measurement time and the measurement time for L1 measurement can be properly configured.

The first part and the second part of the SSB resource of the first frequency may be determined based on a sharing factor. The sharing factor is specified in a protocol or configured by the network side. For example, the L1 measurement occupies 1/3 of all the SSB resource of the first frequency, and the L3 measurement occupies 2/3 of all the SSB resource of the first frequency.

The measurement indicator of the first frequency may include at least one of the following:
maximum allowable time for measuring the first frequency;
maximum allowable time for measuring the reference signal of the first frequency; and
maximum allowable time for measuring the cell of the first frequency.

The extending a measurement indicator of the first frequency may be extending the measurement indicator of the first frequency based on a proportion of the measurement indicator to the SSB resource. For example, the L1 measurement occupies 1/3 of all the SSB resource of the first frequency, and then a measurement indicator of the L1 measurement is extended by three times. The L3 measurement occupies 2/3 of all the SSB resource of the first frequency, and then a measurement indicator of the L3 measurement is extended by 3/2 times.

In the foregoing implementation, it may be implemented that the L1 measurement and the L3 measurement share the SSB resource of the first frequency, and the terminal extends the measurement indicator of the first frequency. In this way, measurement performance of the L1 measurement and the L3 measurement can be ensured.

The first part and the second part of the time interval associated with the first frequency may be determined based on a sharing factor. The sharing factor is specified in a protocol or configured by the network side. For example, the L1 measurement occupies 1/3 of the time interval allocated to the first frequency, and the L3 measurement occupies the remaining 2/3 of the time interval.

The extending a measurement indicator of the first frequency may be extending the measurement indicator of the first frequency based on a proportion of the measurement indicator to the time interval. For example, the L1 measurement occupies 1/3 of the time interval, and then the measurement indicator of the L1 measurement is extended by three times. The L3 measurement occupies 2/3 of the time interval, and then the measurement indicator of the L3 measurement is extended by 3/2 times.

In the foregoing implementation, it may be implemented that the L1 measurement and the L3 measurement share the time interval associated with the first frequency, and the terminal extends the measurement indicator of the first frequency. In this way, measurement performance of the L1 measurement and the L3 measurement can be ensured.

In some implementations, in a case that the first frequency is the inter-frequency or the inactive SCC frequency, and an SSB period is equal to a synchronization signal/physical broadcast channel block measurement timing configuration (SS/PBCH block Measurement Timing Configuration, SMTC) period, the L1 measurement performed by the terminal on the first frequency occupies the first part of the SSB resource of the first frequency, the L3 measurement performed by the terminal on the first frequency occupies the second part of the SSB resource of the first frequency, and the terminal extends the measurement indicator of the first frequency.

As an optional implementation, the method further includes:
reporting, by the terminal, measurement information, where the measurement information includes the second measurement result and the time interval, and the time interval is a time interval between performing of the L1 measurement and reporting of the measurement information.

The reporting, by the terminal, measurement information is reporting the measurement information to the network side.

The time interval is an interval between actual execution time and reporting time of the L1 measurement.

The time interval may be reported in a code point manner. For example, When an X-bit code point in the measurement information carries not more than 2^{X} interval ranges, for example, when X=2, the interval ranges reported by the terminal have four groups in total, which are specifically shown in Table 1:

**Table 1:**

| X=2 | Interval range [slot] between L1 measurement and actual measurement | Remark |
|---|---|---|
| 00 | [0, 5] | Including 5 |
| 01 | [5, 10] | Including 10 |
| 10 | [10, 40] | Including 40 |
| 11 | [40, infinity] | |

In the foregoing implementation, because the measurement gap is reported, it may be beneficial for the network side to deliver a handover decision, or determine sending time of an early physical random access channel (Physical Random Access Channel, PRACH), for example, determine approximate sending time of the early PRACH (early PRACH), thereby improving handover or random access performance of the terminal.

In an optional implementation, the method further includes at least one of the following:
in a case that the measurement time for performing L1 measurement on the first frequency exceeds a second duration, receiving, by the terminal after receiving a physical random access channel (Physical Random Access Channel, PRACH) sending trigger signaling, at least one SSB, performing measurement based on the SSB, and sending a PRACH to a target cell in a case that the SSB-based measurement is completed; or
in a case that the measurement time for performing L1 measurement on the first frequency fails to exceed a second duration, sending, by the terminal, a PRACH to a target cell in response to a received PRACH sending trigger signaling.

The second duration is specified in a protocol or configured by the network side.

The performing measurement based on the SSB may be performing synchronization based on the SSB, for example, performing downlink synchronization based on the SSB, or performing measurement of another cell before handover based on the SSB. This is not limited.

The PRACH sending trigger signaling may be used for indicating that the terminal needs to send the early PRACH (early PRACH) to the target cell before cell handover.

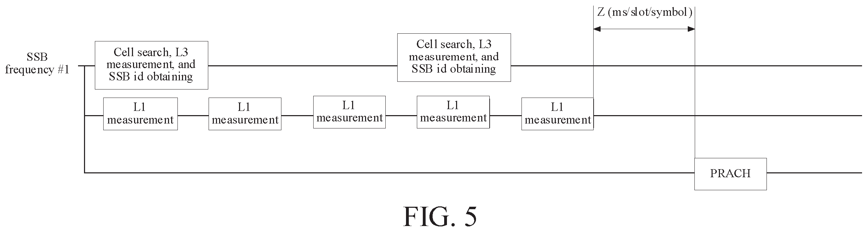

In this implementation, in a case that the measurement time for the L1 measurement exceeds the second duration, the terminal sends the PRACH to the target cell when completing the SSB-based measurement. In this way, the terminal can better access the cell. For example, time for the terminal to perform L1 measurement on a reference signal on an inter-frequency or an inactive SCC frequency last time exceeds the second duration (for example, Z ms). Moreover, based on the network configuration, before cell handover, the terminal needs to send the early PRACH to the target cell. In this case, the terminal needs to wait for one SSB to obtain downlink synchronization to send the PRACH within the second duration (for example, Z ms) before sending the PRACH, so that the terminal can better access the cell. Specifically, as shown in FIG. 5, the terminal sends the PRACH after Z ms/slot/symbol.

In a case that the measurement time for the L1 measurement fails to exceed the second duration, the sending, by the terminal, a PRACH to a target cell in response to a received PRACH sending trigger signaling may be: In a case that the measurement time for the L1 measurement fails to exceed the second duration, the terminal directly sends the PRACH to the target cell based on the PRACH sending trigger signaling. To be specific, the terminal does not need to perform measurement based on the SSB before sending the PRACH, to reduce power consumption of the terminal.

In the embodiments of this application, the terminal obtains a target configuration signaling, where the target configuration signaling instructs to: perform layer L1 measurement on a first frequency; perform, by the terminal, L3 measurement on the first frequency, to obtain a first measurement result; and perform, by the terminal, L1 measurement on the first frequency based on the first measurement result, to obtain a second measurement result. In this way, L1 measurement may be performed based on the L3 measurement result, so that in an L1 measurement process, there is no need to correspondingly interact with the network side for the L3 measurement result, thereby reducing interaction between the terminal and the network side in the L1 measurement process, simplifying an L1-measurement-based mobility management process, and improving efficiency of the L1-measurement-based mobility management process. In addition, because the efficiency of the mobility management process is improved, handover interruption in a high mobility scenario may also be reduced.

The following describes the method according to the embodiments of this application by using an embodiment as an example.

In this embodiment, the terminal receives a measurement configuration signaling for a cell 1 related to the first frequency. The measurement configuration signaling instructs the terminal to perform L1 measurement on the cell 1 corresponding to the first frequency. Therefore, the terminal determines to perform an L3 measurement-related behavior on the first frequency and perform L1 measurement on the cell 1. This process includes the following three specific implementation options.

Option 1: If no L3 measurement performed on the first frequency is configured, or only L3 measurement is configured, but there is no information associated with any L3 reporting, the terminal determines that the L3 measurement-related behavior also needs to be performed on the frequency. In this case, the terminal does not need to perform L3 reporting on the frequency (that is, only when both L3 measurement and a frequency associated with L3 reporting are configured, L3 reporting needs to be performed). The terminal only needs to further perform L1 measurement on the frequency based on the L3 measurement result, and reports the L1 measurement result as L1. In this process, the L3 measurement is used for helping the L1 measurement to perform cell discovery, obtaining of coarse synchronization, obtaining of coarse beam, obtaining of a sequence number of an SSB, and the like. Before starting the L1 measurement on the cell 1, the terminal needs to discover the cell 1 on a corresponding frequency through the L3 measurement;

For example, as shown in FIG. 3, when the network configures the L1 measurement on the SSB frequency (SSB-freq) #1 in the figure, but does not configure the L3 measurement on the SSB-freq #1, or configures only the L3 measurement, but does not have any information associated with reporting of the L3 measurement, the terminal determines that the frequency also needs to perform the L3 measurement-related behavior.

Option 2: If L1 measurement is configured for a frequency in the target configuration signaling, the network needs to or the terminal expects to configure the L3 measurement for this frequency, the L3 measurement is associated with L3 reporting, and the L3 reporting needs to include obtaining of a sequence number of an SSB. Otherwise, the terminal may not perform L1 measurement on the frequency, that is, the terminal does not necessarily need to trigger L1 reporting as long as cell signal quality reaches a condition. In other words, the terminal has no performance requirement on the L1 measurement performed on the frequency.

For example, when the network configures the L1 measurement on the SSB-freq #1 in the figure, but does not configure the L3 measurement on the SSB-freq #1, or configures only the L3 measurement, but is not associated with any L3 reporting, the terminal may not perform L1 measurement on the frequency, and does not need accurate L1 reporting as long as the cell signal quality reaches a specific condition.

Option 3: In the target configuration signaling, if L1 measurement is configured for a frequency, L3 measurement is configured for the frequency, and the L3 measurement is associated with L3 reporting, but no reporting of the sequence number of the SSB is configured in the L3 reporting, the terminal determines that the frequency needs to perform the L3-related behavior and L1 measurement. In other words, in addition to performing SSB detection, and obtaining of coarse synchronization, the terminal further needs to perform obtaining of a sequence number of an SSB. If the terminal determines, based on the configuration for the L3 measurement, that the terminal does not need to perform L3 measurement on this frequency, the terminal may not perform L1 measurement on the frequency.

For example, as shown in FIG. 3, when the network configures the L1 measurement on the SSB-freq #1 in the figure, and also configures L3 measurement on the SSB-freq #1, and the L3 measurement is associated with L3 reporting, but no reporting of the sequence number of the SSB is configured in L3 reporting, the terminal also needs to detect the sequence number of the SSB on the frequency. If L1 measurement is configured on the SSB-freq #1, but L3 measurement is not configured, or L3 measurement is not associated with L3 reporting, the terminal may not perform L1 measurement on the frequency, and does not need accurate L1 reporting as long as the cell signal quality reaches a specific condition.

In this embodiment, the L3 measurement-related behavior includes cell discovery, obtaining of coarse synchronization, obtaining of coarse beam, and obtaining of a sequence number of an SSB. Cell discovery and obtaining of coarse synchronization are generally also referred to as detection of the PSS and the SSS. The obtaining of coarse synchronization and obtaining of coarse beam are also referred to as (SSB-based) cell measurement. The obtaining of a sequence number of an SSB is also referred to as time sequence number detection.

In this embodiment, the first frequency is an SSB frequency. In the foregoing descriptions, the L1 measurement refers to L1 measurement configured in a channel state information measurement configuration (CSI-MeasConfig) or in a low layer-triggered mobility management measurement configuration (LTM-MeasConfig). The L1 measurement terminal performs downlink measurement by using a narrow receive beam or a dense time interval, for example, performs L1 measurement based on a reporting period configured by the network. The L3 measurement may be measurement configured in a new radio measurement configuration (MeasConfigNR). The L3 measurement terminal performs polling-based measurement on a plurality of SSB frequencies by using a wide receive beam or based on a carrier-specific sharing factor (Carrier-specific sharing factor, CSSF) defined by the protocol.

In this embodiment, it can be ensured that before performing L1 measurement, the terminal obtains information such as synchronization and beam required for the L1 measurement through a process related to the L3 measurement, so that performance of the L1 measurement can be effectively ensured. Moreover, the L3 measurement process is reused, and a new cell discovery process or the like is not introduced, so that a baseband related to the L1 measurement can be implemented simply and efficiently.

In this embodiment, after that the terminal determines that the process related to the L3 measurement needs to be first performed, and then the L1 measurement needs to be performed on the first frequency, the method further includes:
when the network configures a plurality of frequencies on which L3 or L1 measurement needs to be performed, and the plurality of different frequencies share a same set of cell search modules, the first frequency is still used as a frequency to share the cell search module with other measurement frequencies. For example, a simple sharing manner is that, when the terminal completes measurement on a frequency, measurement time for L3 measurement performed on the frequency is extended based on a target frequency quantity and an L3 frequency quantity, and the L3 frequency quantity is a quantity of other frequencies in the plurality of frequencies than the frequency configured by the network side for L1 measurement. In a case that the cell search module is a PCC-associated cell search module, the target frequency quantity is equal to a frequency quantity of frequencies configured by the network side for L1 measurement, and the frequencies configured by the network side for L1 measurement at least include a PCC frequency; or in a case that the cell search module is an SCC-associated cell search module, the target frequency quantity is equal to a frequency quantity of frequencies configured by the network side for L1 measurement minus a frequency quantity of PCC, and the frequency quantity of PCC is a frequency quantity of PCC in the frequencies configured by the network side for L1 measurement.

Specifically, for the L1 measurement performed on the inactive SCC, the cell search module shared in the previous L3 measurement performed on the inactive SCC is divided into two manners.

Manner 1: When the network configures the L1 measurement for a first frequency, and the measurement performed on the first frequency is performed outside the gap, the terminal shares the cell search module with the PCC when performing L3 cell search and measurement on the frequency. The target frequency quantity is equal to the frequency quantity of frequencies configured by the network side for L1 measurement. The frequencies configured by the network side for L1 measurement at least include the PCC frequency. The PCC is a potential target primary cell (Primary cell, Pcell). Therefore, a measurement result needs to be comparable with that of the PCC.

Manner 2: When the network configures the L1 measurement for a first frequency, and the measurement performed on the first frequency is performed outside the gap, when performing L3 cell search and measurement on the frequency, the terminal shares the cell search module with existing active and inactive SCCs. The target frequency quantity is equal to the frequency quantity of frequencies configured by the network side for L1 measurement minus the frequency quantity of PCC, and the frequency quantity of PCC is a frequency quantity of PCC in the frequencies configured by the network side for L1 measurement.

In some implementations, if no L1 measurement is configured on the inactive SCC, a sharing manner for the cell search module on the inactive SCC is sharing the cell search module with the inactive SCC. To be specific, a carrier scaling factor is a quantity of active SCCs plus a quantity of inactive SCCs.

If a frequency corresponding to the L1 measurement is in an active bandwidth part (Bandwidth Part, BWP) bandwidth (including inter-frequency measurement in an active BWP), the terminal needs to continuously perform L1 measurement on an SSB (which may correspond to a sequence number of an SSB of a cell) on which L1 measurement is configured and that is discovered in the latest L3 measurement on the frequency, until signal quality of the SSB does not meet a channel condition required for measurement, or the network cancels an L1 measurement configuration.

If the frequency corresponding to the L1 measurement in the SCC is outside the active BWP bandwidth, that is, the L1 measurement on the inactive SCC, and if the terminal has previously discovered the SSB whose sequence number is X1 on the cell A in the L3 measurement process within a duration X, discovers and completes the L3 measurement, if the network configures the terminal to perform L1 measurement on the SSB whose sequence number is X1 on the cell A, the terminal needs to complete the measurement based on a requirement. Before the terminal discovers the SSB whose sequence number is X1 on the cell A through the L3 measurement and completes the measurement, the terminal has no L1 measurement requirement on the SSB, that is, may not perform L1 measurement. The duration X is a fixed value, or a value obtained by taking a fixed multiple of the L3 measurement period. It should be noted that, different from FIG. 3, a length of X may be longer than a period in which L3 measurement is actually performed on the frequency. If X is longer than the actual L3 measurement period, it may be considered that the terminal needs to continuously perform L1 measurement on the frequency. If X is shorter than the actual L3 measurement period, the terminal may perform L1 measurement within the X duration after each L3 measurement is completed.

L1 measurement on FR1 may be performed at the same time with L3 measurement, time division multiplexing of an SSB resource does not need to be performed between the L1 measurement and the L3 measurement, and the L1 measurement and the L3 measurement may be performed in a same slot.

For L1 measurement on FR2, considering that beams for measuring the SSBs are different, time division multiplexing needs to be performed on the SSB resource for the L1 measurement and the L3 measurement on FR2. Specifically, for an inactive SCC configured with L1 measurement, if it is determined, based on X, that L1 measurement needs to be continuously performed on the frequency layer, and if an SSB period and an SMTC period are exactly the same, the L1 measurement occupies 1/3 of all the SSB resource, the L3 measurement occupies 2/3 of the SSB resource, and L1 and L3 measurement indicators on each frequency are correspondingly extended.

As shown in FIG. 3, the SSB-freq #1 is L1 measurement configured on the inactive SCC, and the terminal has an L1 measurement requirement within the duration X. After the duration X is exceeded, due to the high likelihood of changes in information such as SSB signal quality and time-frequency domain coarse synchronization, the terminal no longer has the L1 measurement requirement. An SSB-freq #3 is an active SCC. Therefore, the terminal needs to continuously perform L1 measurement as long as the terminal discovers the SSB during the L3 measurement.

For inter-frequency L1 measurement outside the active BWP, because such inter-frequency measurement can be performed only in the gap, when there are a plurality of frequencies on which inter-frequency L3 measurement needs to be performed, for a frequency configured with L1 measurement, L3 measurement can be performed only in a gap resource of L3 measurement corresponding to the frequency. The frequency is also used as one of the L3 frequencies, and participates in calculation of the carrier sharing factor in the gap. As shown in FIG. 4, on a plurality of frequencies, assuming that the terminal needs to use L sampling points (Sample) to complete a process related to L3 measurement, such as SSB search, SSB measurement, and SSB sequence number detection, and needs K samples to perform L1 measurement, N_{gap} represents a quantity of measurement gaps required by each frequency layer in each round of polling. Within a duration of each N_{gap}, the terminal needs a frequency range (Radio Frequency, RF) to be tuned to a corresponding SSB frequency, to conveniently start corresponding measurement.

L1 measurement on FR1 may be performed at the same time with L3 measurement, time division multiplexing of an SSB resource does not need to be performed between the L1 measurement and the L3 measurement, and the L1 measurement and the L3 measurement may be performed in a same gap. A possible implementation is: An FR1 inter-frequency L3 measurement indicator may be reused in the definition of the measurement indicator within the FR1 inter-frequency gap. For example:

After completing the L3 measurement, the terminal needs K samples to continue to complete the L1 measurement. A value of K is consistent with an existing in-band L1 measurement. Because K is much smaller than L, an actual measurement period and measurement indicator on a sub-carrier are the same as those of L3.

A carrier sharing factor of the inter-frequency L1 measurement is completely the same as that of the L3 measurement.

If time for which L3 measurement is performed on a reference signal on an inter-frequency last time has exceeded the second duration Y, the terminal may not perform L1 measurement on the reference signal before completing the L3 measurement next time. It may also be understood that when an actual L3 measurement period of a reference signal on an inter-frequency exceeds the second duration Y, there is no L1 measurement indicator on the frequency. The duration Y is a fixed value, or a value obtained by taking a fixed multiple of the L3 measurement period.

For inter-frequency L1 measurement on FR2, considering that beams for measuring the SSBs are different, time division multiplexing needs to be performed on the SSB resource for the L1 measurement and the L3 measurement on FR2. Specifically, there are the following several options.

Option 1: A time division multiplexing and sharing manner of the L1 measurement and the L3 measurement is as follows. The L1 measurement is performed after the L3 measurement. For the frequency on which both the L3 measurement and the L1 measurement need to be performed, measurement time on the frequency is a sum of the L3 measurement time and the L1 measurement time. Total measurement time for all the frequencies (including the L3 measurement and the L1 measurement) is a sum of measurement time on all frequencies on which the cell search module needs to be shared.

Option 2: A time division multiplexing and sharing manner of the L1 measurement and the L3 measurement is as follows. The L1 measurement and the L3 measurement are entirely scaled through the sharing factor. For example, for an inactive SCC configured with L1 measurement, if an SSB period and an SMTC period are exactly the same, the L1 measurement occupies 1/3 of all the SSB resource, the L3 measurement occupies 2/3 of the SSB resource, and measurement indicators on each frequency are correspondingly extended.

It should be noted that, in this embodiment, 1/3 and 2/3 are exemplary descriptions, and other sharing factors may also be considered. This is not limited.

In some implementations, if time for performing L1 measurement on a reference signal on an inter-frequency or an inactive SCC frequency last time exceeds a third duration Z, and the terminal needs to send a PRACH to the target cell in advance based on the network configuration, that is, an early PRACH before cell handover, the terminal needs to wait for one SSB to obtain downlink synchronization (that is, perform L3 measurement or L1 measurement) within Z ms before sending the PRACH. Specifically, as shown in FIG. 5, it is generally considered that Z is equal to 160 [ms].

In some implementations, the terminal reports, in L1 reporting, an interval between actual execution time and reporting time of L1 measurement. This is mainly because, in FIG. 3 or FIG. 4, the L1 measurement is not necessarily performed continuously, and a part of the L1 measurement needs to be performed within the gap. Therefore, even a latest L1 measurement result may have a considerable interval between the latest L1 measurement result and the reporting time. This information is reported to the network, helping the network deliver a handover decision, or determine approximate sending time of the early PRACH. A specific reporting manner may be: reporting an X-bit code point, to carry no more than 2 interval ranges. For example, when X=2, there are four groups of interval ranges reported by the terminal in total. For specific details, refer to the foregoing Table 1. Details are not described herein again.

The measurement method according to the embodiments of this application may be executed by a measurement apparatus. In the embodiments of this application, the measurement apparatus according to the embodiments of this application is described by using an example in which the measurement apparatus executes the measurement method.

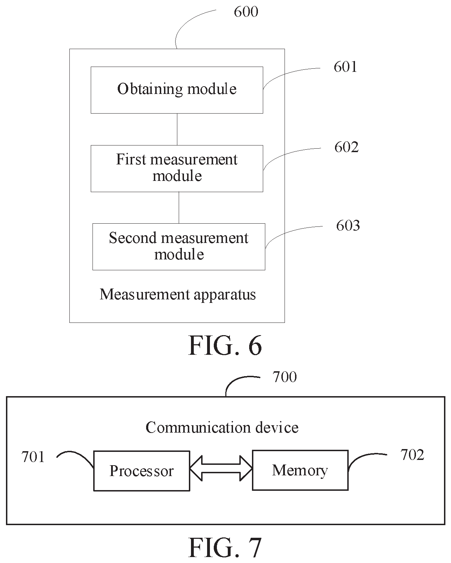

Referring to FIG. 6, FIG. 6 is a structural diagram of a measurement apparatus according to an embodiment of this application. As shown in FIG. 6, the measurement apparatus 600 includes:
an obtaining module 601, configured to obtain a target configuration signaling, where the target configuration signaling instructs to perform layer L1 measurement on a first frequency;
a first measurement module 602, configured to perform L3 measurement on the first frequency, to obtain a first measurement result; and
a second measurement module 603, configured to perform L1 measurement on the first frequency based on the first measurement result, to obtain a second measurement result.

Optionally, the first measurement module 602 is configured to: in a first case, perform L3 measurement on the first frequency, to obtain the first measurement result, where
the first case includes one of the following:
instructing, by a configuration signaling obtained by the terminal, to perform L3 measurement on the first frequency; or
skipping instructing, by a configuration signaling obtained by the terminal, to perform L3 measurement on the first frequency, where
the configuration signaling obtained by the terminal includes the target configuration signaling, or includes a configuration signaling different from the target configuration signaling.

Optionally, in a case that the first case includes the instructing, by a configuration signaling obtained by the terminal, to perform L3 measurement on the first frequency, the first case further includes at least one of the following:
skipping indicating, by the configuration signaling obtained by the terminal, reporting information associated with the L3 measurement performed on the first frequency; and
instructing, by the configuration signaling obtained by the terminal, the terminal to obtain a sequence number of a synchronization signal block SSB on the first frequency, or skipping instructing, by the configuration signaling obtained by the terminal, the terminal to obtain a sequence number of an SSB on the first frequency, where
in a case that the configuration signaling obtained by the terminal skips instructing the terminal to obtain the sequence number of the SSB on the first frequency, the terminal determines that the L3 measurement performed on the first frequency includes obtaining the sequence number of the SSB.

Optionally, in a case that the terminal expects that the target configuration signaling instructs to perform layer L1 measurement on the first frequency, the configuration signaling obtained by the terminal instructs to perform L3 measurement on the first frequency, and instructs to obtain the sequence number of the SSB for the first frequency.

Optionally, the second measurement module 603 is configured to: in a second case, perform L1 measurement on the first frequency based on the first measurement result, to obtain the second measurement result, where
the second case includes:
a time difference between measurement time for the L3 measurement performed on the first frequency and measurement time for the L1 measurement performed on the first frequency being within a preset range.

Optionally, in a case that the terminal is configured to perform measurement on a plurality of frequencies including the first frequency, and the terminal shares a same set of cell search modules for the plurality of frequencies, the terminal extends the measurement time for the L3 measurement performed on the first frequency based on a target frequency quantity and an L3 measurement frequency quantity, and the L3 measurement frequency quantity is a quantity of other frequencies in the plurality of frequencies than a frequency configured by a network side for L1 measurement; and
in a case that the cell search module is a cell search module associated with a primary component carrier PCC, the target frequency quantity is equal to a frequency quantity of frequencies configured by a network side for L1 measurement, and the frequencies configured by a network side for L1 measurement at least include a PCC frequency; or
in a case that the cell search module is a cell search module associated with a secondary component carrier SCC, the target frequency quantity is equal to a frequency quantity of frequencies configured by a network side for L1 measurement minus a frequency quantity of PCC, and the frequency quantity of PCC is a frequency quantity of PCC in the frequencies configured by a network side for L1 measurement.

Optionally, the performing, by the terminal, L1 measurement on the first frequency based on the first measurement result, to obtain a second measurement result includes:
performing, by the terminal, L1 measurement on a first synchronization signal block SSB in a first cell, to obtain the second measurement result, where
the first measurement result includes at least one of the following:
   discovery of the first cell; and
   a sequence number of the first SSB.

Optionally, the second measurement module 603 is configured to: performing L1 measurement on the first SSB in the first cell, to obtain the second measurement result in a case that the first frequency is an inactive-state SCC frequency or an inter-frequency, and the terminal performs L3 measurement on the first frequency within a first duration.

Optionally, measurement time of the terminal for the first frequency is equal to a sum of L3 measurement time and L1 measurement time; or
the L1 measurement performed by the terminal on the first frequency occupies a first part of an SSB resource of the first frequency, the L3 measurement performed by the terminal on the first frequency occupies a second part of the SSB resource of the first frequency, and the terminal extends a measurement indicator of the first frequency; or
the L1 measurement performed by the terminal on the first frequency occupies a first part of a time interval associated with the first frequency, the L3 measurement performed by the terminal on the first frequency occupies a second part of the time interval associated with the first frequency, and the terminal extends a measurement indicator of the first frequency.

In some embodiments, the apparatus further includes:
a reporting module, configured to report measurement information, where the measurement information includes the second measurement result and the time interval, and the time interval is a time interval between performing of the L1 measurement and reporting of the measurement information.

Optionally, the apparatus further includes at least one of the following:
a first sending module, configured to: in a case that the measurement time for performing L1 measurement on the first frequency exceeds a second duration, receive, by the terminal after receiving a physical random access channel PRACH sending trigger signaling, at least one SSB, perform measurement based on the SSB, and send a PRACH to a target cell in a case that the SSB-based measurement is completed; and
a second sending module, configured to: in a case that the measurement time for performing L1 measurement on the first frequency fails to exceed a second duration, send, by the terminal, a PRACH to a target cell in response to a received PRACH sending trigger signaling.

Optionally, the first measurement result includes at least one of the following:
discovery of a cell, the sequence number of the SSB, coarse synchronization information, and coarse beam information.

The measurement apparatus may simplify the L1 measurement process.

The measurement apparatus in the embodiments of this application may be an electronic device, for example, an electronic device having an operating system, or may be a component in the electronic device, for example, an integrated circuit or a chip. For example, the electronic device may be a terminal or another device other than the terminal. Exemplarily, the terminal may include, but is not limited to, the type of the terminal listed in the embodiments of this application, and the another device may be a server, a network attached storage (Network Attached Storage, NAS), or the like. This is not specifically limited in the embodiments of this application.

The measurement apparatus according to the embodiments of this application can implement the processes implemented in the method embodiment shown in FIG. 2, and achieve the same technical effect. To avoid repetition, details are not described herein again.

Optionally, as shown in FIG. 7, embodiments of this application further provide a communications device 700, including a processor 701 and a memory 702. The memory 702 stores a program or instructions runnable on the processor 701. For example, when the communication device 700 is a first device, and when the program or the instructions are executed by the processor 701, steps in the foregoing control information transmission method embodiment are implemented, and the same technical effect can be achieved. To avoid repetition, details are not described herein again.

Embodiments of this application further provide a communication device, including a processor and a communication interface. The communication interface is configured to obtain a target configuration signaling, where the target configuration signaling instructs to: perform layer L1 measurement on a first frequency; perform L3 measurement on the first frequency, to obtain a first measurement result; and perform L1 measurement on the first frequency based on the first measurement result, to obtain a second measurement result. The communication device embodiment corresponds to the foregoing measurement method embodiment. Implementation processes and implementations in the foregoing method embodiment are applicable to the communication device embodiment, and the same technical effect can be achieved.

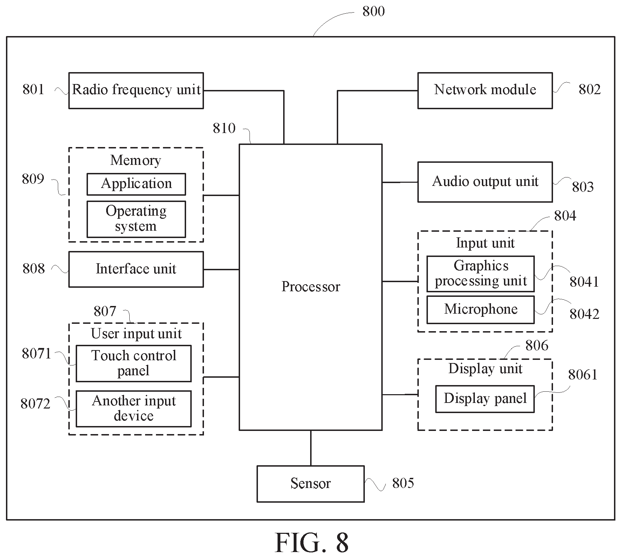

Specifically, FIG. 8 is a schematic diagram of a hardware structure of a terminal according to an embodiment of this application.

The terminal 800 includes, but is not limited to, at least a part of components such as a radio frequency unit 801, a network module 802, an audio output unit 803, an input unit 804, a sensor 805, a display unit 806, a user input unit 807, an interface unit 808, a memory 809, and a processor 810.

A person skilled in the art may understand that the terminal 800 may further include a power supply (for example, a battery) for supplying power to the components. The power supply may be logically connected to the processor 810 through a power management system, thereby implementing functions such as charging, discharging, and power consumption management by using the power management system. A terminal structure shown in FIG. 8 constitutes no limitation on the terminal, and the terminal may include more or fewer components than those shown in the figure, or some components may be combined, or a different component deployment may be used. Details are not described herein again.

It should be understood that in the embodiments of this application, the input unit 804 may include a graphics processing unit (Graphics Processing Unit, GPU) 8041 and a microphone 8042, and the graphics processing unit 8041 processes image data of a still picture or a video obtained by an image capture apparatus (such as a camera) in a video capture mode or an image capture mode. The display unit 806 may include a display panel 8061, and the display panel 8061 may be configured in a form of a liquid crystal display, an organic light-emitting diode, or the like. The user input unit 807 includes at least one of a touch panel 8071 and another input terminal 8072. The touch panel 8071 is also referred to as a touch screen. The touch panel 8071 may include two parts: a touch detection apparatus and a touch controller. The another input terminal 8072 may include, but is not limited to, a physical keyboard, a functional key (for example, a volume control key or a switch key), a track ball, a mouse, and a joystick. Details are not described herein again.

In the embodiments of this application, the radio frequency unit 801 receives downlink data from a network side terminal, and then transmits the downlink data to the processor 810 for processing. In addition, the radio frequency unit 801 may send uplink data to the network side terminal. Generally, the radio frequency unit 801 includes, but is not limited to, an antenna, an amplifier, a transceiver, a coupler, a low noise amplifier, a duplexer, and the like.

The memory 809 may be configured to store a software program or instructions, and various data. The memory 809 may mainly include a first storage area storing a program or instructions and a second storage area storing data. The first storage area may store an operating system, an application or instructions required by at least one function (for example, a sound playback function and an image display function), and the like. In addition, the memory 809 may include a volatile memory or a non-volatile memory, or the memory 809 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 809 in the embodiments of this application includes, but is not limited to, these and any other suitable types of memories.

The processor 810 may include one or more processing units. Optionally, the processor 810 integrates an application processor and a modem processor. The application processor mainly processes operations related to an operating system, a user interface, an application, and the like. The modem processor mainly processes a wireless communication signal, such as a baseband processor. It may be understood that, the modem processor may not be integrated into the processor 810.

In this embodiment, the terminal is a first terminal, and an example in which the first terminal is a terminal is specifically used for description.

The radio frequency unit 801 is configured to obtain a target configuration signaling, where the target configuration signaling instructs to: perform layer L1 measurement on a first frequency; perform L3 measurement on the first frequency, to obtain a first measurement result; and perform L1 measurement on the first frequency based on the first measurement result, to obtain a second measurement result.

Optionally, the performing L3 measurement on the first frequency, to obtain a first measurement result includes:
in a first case, perform L3 measurement on the first frequency, to obtain the first measurement result, where
the first case includes one of the following:
   instructing, by a configuration signaling obtained by the terminal, to perform L3 measurement on the first frequency; or
   skipping instructing, by a configuration signaling obtained by the terminal, to perform L3 measurement on the first frequency, where
   the configuration signaling obtained by the terminal includes the target configuration signaling, or includes a configuration signaling different from the target configuration signaling.

Optionally, in a case that the first case includes the instructing, by a configuration signaling obtained by the terminal, to perform L3 measurement on the first frequency, the first case further includes at least one of the following:
skipping indicating, by the configuration signaling obtained by the terminal, reporting information associated with the L3 measurement performed on the first frequency; and
instructing, by the configuration signaling obtained by the terminal, the terminal to obtain a sequence number of a synchronization signal block SSB on the first frequency, or skipping instructing, by the configuration signaling obtained by the terminal, the terminal to obtain a sequence number of an SSB on the first frequency, where
in a case that the configuration signaling obtained by the terminal skips instructing the terminal to obtain the sequence number of the SSB on the first frequency, the terminal determines that the L3 measurement performed on the first frequency includes obtaining the sequence number of the SSB.

Optionally, in a case that the terminal expects that the target configuration signaling instructs to perform layer L1 measurement on the first frequency, the configuration signaling obtained by the terminal instructs to perform L3 measurement on the first frequency, and instructs to obtain the sequence number of the SSB for the first frequency.

Optionally, the performing L1 measurement on the first frequency based on the first measurement result, to obtain a second measurement result includes:
in a second case, perform L1 measurement on the first frequency based on the first measurement result, to obtain the second measurement result. where
the second case includes:
   a time difference between measurement time for the L3 measurement performed on the first frequency and measurement time for the L1 measurement performed on the first frequency being within a preset range.

Optionally, in a case that the terminal is configured to perform measurement on a plurality of frequencies including the first frequency, and the terminal shares a same set of cell search modules for the plurality of frequencies, the terminal extends the measurement time for the L3 measurement performed on the first frequency based on a target frequency quantity and an L3 measurement frequency quantity, and the L3 measurement frequency quantity is a quantity of other frequencies in the plurality of frequencies than a frequency configured by a network side for L1 measurement; and
in a case that the cell search module is a cell search module associated with a primary component carrier PCC, the target frequency quantity is equal to a frequency quantity of frequencies configured by a network side for L1 measurement, and the frequencies configured by a network side for L1 measurement at least include a PCC frequency; or
in a case that the cell search module is a cell search module associated with a secondary component carrier SCC, the target frequency quantity is equal to a frequency quantity of frequencies configured by a network side for L1 measurement minus a frequency quantity of PCC, and the frequency quantity of PCC is a frequency quantity of PCC in the frequencies configured by a network side for L1 measurement.

Optionally, the performing L1 measurement on the first frequency based on the first measurement result, to obtain a second measurement result includes:
performing L1 measurement on a first synchronization signal block SSB in a first cell, to obtain the second measurement result, where
the first measurement result includes at least one of the following:
   discovery of the first cell; and
   a sequence number of the first SSB.

Optionally, the performing L1 measurement on a first SSB in a first cell, to obtain the second measurement result includes:
performing L1 measurement on the first SSB in the first cell, to obtain the second measurement result in a case that the first frequency is an inactive-state SCC frequency or an inter-frequency, and the terminal performs L3 measurement on the first frequency within a first duration.

Optionally, measurement time of the terminal for the first frequency is equal to a sum of L3 measurement time and L1 measurement time; or
the L1 measurement performed by the terminal on the first frequency occupies a first part of an SSB resource of the first frequency, the L3 measurement performed by the terminal on the first frequency occupies a second part of the SSB resource of the first frequency, and the terminal extends a measurement indicator of the first frequency; or
the L1 measurement performed by the terminal on the first frequency occupies a first part of a time interval associated with the first frequency, the L3 measurement performed by the terminal on the first frequency occupies a second part of the time interval associated with the first frequency, and the terminal extends a measurement indicator of the first frequency.

Optionally, the radio frequency unit 801 is further configured to:
report measurement information, where the measurement information includes the second measurement result and the time interval, and the time interval is a time interval between performing of the L1 measurement and reporting of the measurement information.

Optionally, the radio frequency unit 801 is further configured to, at least one of the following:
in a case that the measurement time for performing L1 measurement on the first frequency exceeds a second duration, receive, by the terminal after receiving a physical random access channel PRACH sending trigger signaling, at least one SSB, perform measurement based on the SSB, and send a PRACH to a target cell in a case that the SSB-based measurement is completed; or
in a case that the measurement time for performing L1 measurement on the first frequency fails to exceed a second duration, send a PRACH to a target cell in response to a received PRACH sending trigger signaling.

Optionally, the first measurement result includes at least one of the following:
discovery of a cell, the sequence number of the SSB, coarse synchronization information, and coarse beam information.

The terminal may simplify the L1 measurement process.

It may be understood that for implementation processes of the implementations in this embodiment, refer to the relevant descriptions in the method embodiment, and the same or corresponding technical effect is achieved. To avoid repetition, details are not described herein again.

Embodiments of this application further provide a readable storage medium. The readable storage medium stores a program or instructions. When the program or the instructions are executed by a processor, the processes of the foregoing measurement method embodiment are implemented, and the same technical effect can be achieved. To avoid repetition, details are not described herein again.

The processor is a processor in the terminal in the foregoing embodiments. The readable storage medium includes a computer-readable storage medium, such as a computer read-only memory ROM, a random access memory RAM, a magnetic disk, or an optical disk. In some examples, the readable storage medium may be a non-transient readable storage medium.

Embodiments of this application further provide a chip. The chip includes a processor and a communication interface. The communication interface is coupled to the processor. The processor is configured to run a program or instructions, to implement the processes of the foregoing measurement method embodiment, and the same technical effect can be achieved. To avoid repetition, details are not described herein again.

It should be understood that, the chip mentioned in the embodiments of this application may be further referred to as a system-level chip, a system chip, a chip system, a system on chip, or the like.

Embodiments of this application further provide a computer program/program product. The computer program/program product is stored in a storage medium. The computer program/program product is executed by at least one processor to implement the processes of the foregoing measurement method embodiment, and the same technical effect can be achieved. To avoid repetition, details are not described herein again.

It should be noted that the terms "include", "comprise", or any other variants thereof in this specification are intended to cover non-exclusive inclusion, so that a process, a method, an object, or an apparatus that includes a series of elements not only includes the elements, but also includes other elements that are not expressly listed, or may further include elements that are inherent to the process, the method, the object, or the apparatus. Without more restrictions, an element defined by a phrase "including one ..." does not exclude existence of other same elements in a process, a method, an article, or an apparatus that includes the element. In addition, it should be noted that the scope of the method and the apparatus in the implementations of this application is not limited to function execution in the order shown or discussed, and may further include function execution in a substantially simultaneous manner or in the opposite order based on the functions. For example, the described method may be performed in different order from the described order, and various steps may also be added, omitted, or combined. In addition, features described with reference to some examples may alternatively be combined in other examples.

According to the descriptions in the foregoing implementations, a person skilled in the art may clearly learn that the method according to the foregoing embodiments may be implemented by a computer software product plus a necessary general-purpose hardware platform, or certainly by hardware. The computer software product is stored in a storage medium (such as a ROM, a RAM, a magnetic disk, or an optical disk), including several instructions to enable a terminal or a network side device to perform the method according to the embodiments of this application.

Although the embodiments of this application are described above with reference to the accompanying drawings, this application is not limited to the foregoing specific implementations. The foregoing specific implementations are merely illustrative rather than restrictive. With the enlightenment of this application, a person of ordinary skill in the art may make many forms of implementations without departing from the spirit of this application and the protection scope of the claims. These implementations fall within the protection of this application.

## Claims

1. A measurement method, comprising:
obtaining, by a terminal, a target configuration signaling, wherein the target configuration signaling instructs to perform L1 measurement on a first frequency;
performing, by the terminal, L3 measurement on the first frequency, to obtain a first measurement result; and
performing, by the terminal, L1 measurement on the first frequency based on the first measurement result, to obtain a second measurement result.

2. The method according to claim 1, wherein the performing, by the terminal, L3 measurement on the first frequency, to obtain a first measurement result comprises:
in a first case, performing, by the terminal, L3 measurement on the first frequency, to obtain the first measurement result, wherein
the first case comprises one of the following:
instructing, by a configuration signaling obtained by the terminal, to perform L3 measurement on the first frequency; or
skipping instructing, by a configuration signaling obtained by the terminal, to perform L3 measurement on the first frequency, wherein
the configuration signaling obtained by the terminal comprises the target configuration signaling, or comprises a configuration signaling different from the target configuration signaling.

3. The method according to claim 2, wherein in a case that the first case comprises the instructing, by a configuration signaling obtained by the terminal, to perform L3 measurement on the first frequency, the first case further comprises at least one of the following:
skipping indicating, by the configuration signaling obtained by the terminal, reporting information associated with the L3 measurement performed on the first frequency; and
instructing, by the configuration signaling obtained by the terminal, the terminal to obtain a sequence number of a synchronization signal block SSB on the first frequency, or skipping instructing, by the configuration signaling obtained by the terminal, the terminal to obtain a sequence number of an SSB on the first frequency, wherein
in a case that the configuration signaling obtained by the terminal skips instructing the terminal to obtain the sequence number of the SSB on the first frequency, the terminal determines that the L3 measurement performed on the first frequency comprises obtaining the sequence number of the SSB.

4. The method according to claim 2 or 3, wherein in a case that the terminal expects that the target configuration signaling instructs to perform layer L1 measurement on the first frequency, the configuration signaling obtained by the terminal instructs to perform L3 measurement on the first frequency, and instructs to obtain the sequence number of the SSB for the first frequency.

5. The method according to any one of claims 1 to 4, wherein the performing, by the terminal, L1 measurement on the first frequency based on the first measurement result, to obtain a second measurement result comprises:
in a second case, performing, by the terminal, L1 measurement on the first frequency based on the first measurement result, to obtain the second measurement result, wherein
the second case comprises:
a time difference between measurement time for the L3 measurement performed on the first frequency and measurement time for the L1 measurement performed on the first frequency being within a preset range.

6. The method according to any one of claims 1 to 5, wherein in a case that the terminal is configured to perform measurement on a plurality of frequencies comprising the first frequency, and the terminal shares a same set of cell search modules for the plurality of frequencies, the terminal extends the measurement time for the L3 measurement performed on the first frequency based on a target frequency quantity and an L3 measurement frequency quantity, and the L3 measurement frequency quantity is a quantity of other frequencies in the plurality of frequencies than a frequency configured by a network side for L1 measurement; and
in a case that the cell search module is a cell search module associated with a primary component carrier PCC, the target frequency quantity is equal to a frequency quantity of frequencies configured by a network side for L1 measurement, and the frequencies configured by a network side for L1 measurement at least comprise a PCC frequency; or
in a case that the cell search module is a cell search module associated with a secondary component carrier SCC, the target frequency quantity is equal to a frequency quantity of frequencies configured by a network side for L1 measurement minus a frequency quantity of PCC, and the frequency quantity of PCC is a frequency quantity of PCC in the frequencies configured by a network side for L1 measurement.

7. The method according to any one of claims 1 to 6, wherein the performing, by the terminal, L1 measurement on the first frequency based on the first measurement result, to obtain a second measurement result comprises:
performing, by the terminal, L1 measurement on a first synchronization signal block SSB in a first cell, to obtain the second measurement result, wherein
the first measurement result comprises at least one of the following:
discovery of the first cell; and
a sequence number of the first SSB.

8. The method according to claim 7, wherein the performing, by the terminal, L1 measurement on a first SSB in a first cell, to obtain the second measurement result comprises:
in a case that the first frequency is an inactive-state SCC frequency or an inter-frequency, and the terminal performs L3 measurement on the first frequency within a first duration, performing, by the terminal, L1 measurement on the first SSB in the first cell, to obtain the second measurement result.

9. The method according to claim 7 or 8, wherein measurement time of the terminal for the first frequency is equal to a sum of L3 measurement time and L1 measurement time; or
the L1 measurement performed by the terminal on the first frequency occupies a first part of an SSB resource of the first frequency, the L3 measurement performed by the terminal on the first frequency occupies a second part of the SSB resource of the first frequency, and the terminal extends a measurement indicator of the first frequency; or
the L1 measurement performed by the terminal on the first frequency occupies a first part of a time interval associated with the first frequency, the L3 measurement performed by the terminal on the first frequency occupies a second part of the time interval associated with the first frequency, and the terminal extends a measurement indicator of the first frequency.

10. The method according to any one of claims 1 to 9, wherein the method further comprises:
reporting, by the terminal, measurement information, wherein the measurement information comprises the second measurement result and the time interval, and the time interval is a time interval between performing of the L1 measurement and reporting of the measurement information.

11. The method according to any one of claims 1 to 10, wherein the method further comprises at least one of the following:
in a case that the measurement time for performing L1 measurement on the first frequency exceeds a second duration, receiving, by the terminal after receiving a physical random access channel PRACH sending trigger signaling, at least one SSB, performing measurement based on the SSB, and sending a PRACH to a target cell in a case that the SSB-based measurement is completed; or
in a case that the measurement time for performing L1 measurement on the first frequency fails to exceed a second duration, sending, by the terminal, a PRACH to a target cell in response to a received PRACH sending trigger signaling.

12. The method according to any one of claims 1 to 11, wherein the first measurement result comprises at least one of the following:
discovery of a cell, the sequence number of the SSB, coarse synchronization information, and coarse beam information.

13. A measurement apparatus, comprising:
an obtaining module, configured to obtain a target configuration signaling, wherein the target configuration signaling instructs to perform L1 measurement on a first frequency;
a first measurement module, configured to perform L3 measurement on the first frequency, to obtain a first measurement result; and
a second measurement module, configured to perform L1 measurement on the first frequency based on the first measurement result, to obtain a second measurement result.

14. A terminal, comprising a processor and a memory, wherein the memory stores a program or instructions runnable on the processor, and when the program or the instructions are executed by the processor, steps of the measurement method according to any one of claims 1 to 12 are implemented.

15. A readable storage medium, wherein the readable storage medium stores a program or instructions, and when the program or the instructions are executed by a processor, steps of the measurement method according to any one of claims 1 to 12 are implemented.

16. A chip, comprising a processor and a communication interface, wherein the communication interface is coupled to the processor, and the processor is configured to run a program or instructions, to implement steps of the measurement method according to any one of claims 1 to 12.

17. A computer program product, wherein the computer program product is stored in a storage medium, and the computer program product is executed by at least one processor, to implement steps of the measurement method according to any one of claims 1 to 12.
